# EUROPEAN PATENT SPECIFICATION

(11) **EP 3 285 546 B1**
(45) Date of publication and mention of the grant of the patent: **24.07.2019**
(21) Application number: 16779748.9
(22) Date of filing: 05.04.2016
(51) Int. Cl.: H05B 6/12, H05B 6/06

(54) **COOKER**
KOCHER
CUISEUR

(30) Priority: 15.04.2015 JP 2015082966
(43) Date of publication of application: 21.02.2018
(73) Proprietor: Panasonic Intellectual Property Management Co., Ltd., Osaka-shi, Osaka 540-6207 (JP)
(72) Inventor: ISAGO, Hiroshi, Osaka-shi, Osaka 540-6207 (JP); TAKAHASHI, Tomoya, Osaka-shi, Osaka 540-6207 (JP); WATANABE, Noriaki, Osaka-shi, Osaka 540-6207 (JP); TAKENAKA, Kazuhiko, Osaka-shi, Osaka 540-6207 (JP)
(74) Representative: SSM Sandmair
(86) International application number: PCT/JP2016/001911
(87) International publication number: WO 2016/166951

(56) References cited:
- EP-A1- 0 921 711
- EP-A1- 2 709 424
- WO-A1-2008/058614
- WO-A1-2015/015375
- FR-A1- 2 315 819
- JP-A- 2007 287 590
- JP-A- 2010 282 782

## Description

### TECHNICAL FIELD

The present disclosure relates to a cooker performing induction heating.

### BACKGROUND ART

Patent literature 1 discloses a structure of an induction cooker including two heating coils adjacent to each other, and electric currents flow in opposite directions to each other through the two coils for increasing a heating efficiency.

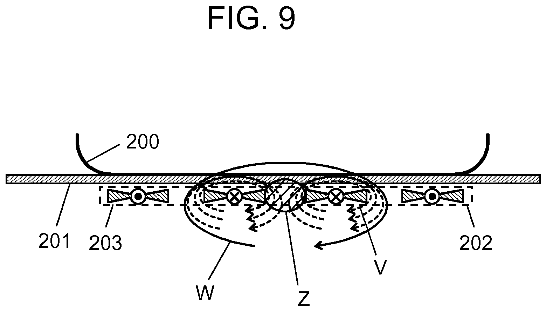

FIG. 9 is a sectional view of the conventional cooker discussed above, and illustrates electric currents and magnetic fields relevant to the two heating coils adjacent to each other.

As FIG. 9 shows, the conventional cooker includes top plate 201, on which cooking utensil 200 such as a pan is to be placed, and multiple heating coils placed in matrix and disposed below top plate 201. Electric currents flow in opposite directions to each other through the two heating coils most closely adjacent to each other (heating coils 202, 203) among the multiple heating coils. This is a feature of this conventional cooker.

The foregoing structure allows the magnetic fluxes given off by the individual heating coils to strengthen each other as locus V in FIG. 9 shows, so that the magnetic flux in region Z located between the adjacent heating coils 202 and 203 is strengthened as locus W in FIG. 9 shows. As a result, the conventional cooker discussed above allows heating the cooking utensil 200 intensely at the center.

FR 2 315 819 A1 discloses an electromagnetic inductor for heating by induction that has n elementary inductors arranged side by side when n is at least equal to 2. The n elementary inductors are wound and connected to an alternating source so that two adjacent inductors produce magnetic fields in phase opposition. The inductors are also arranged with respect to each other so that at least a part of the magnetic flux leaving one of them returns through the inductor or induction surrounding it. The n identical elementary inductors are aligned on the same electrically insulating material support. The inductors are in the form of rectangular windings. The support is cylindrical.

### CITATION LIST

Patent Literature 1: Unexamined Japanese Patent Application Publication No. 2010 - 153060

### SUMMARY OF THE DISCLOSURE

Nevertheless parts of the strengthened magnetic flux sometimes leak from the foregoing conventional cooker.

The present disclosure addresses this problem, and aims to improve the heating efficiency as well as to prevent a leakage of electromagnetic wave.

A cooker in accordance with an aspect of the present disclosure is formed of a main body including a top plate on which a cooking utensil is to be placed, and a heating coil section including a line on which at least four heating coils are placed on the same plane and disposed within the main body.

The heating coil section includes a first heating coil disposed at a first end of the line, a second heating coil disposed at a second end of the line, a third heating coil next to the first heating coil, and a fourth heating coil next to the second heating coil. In other words, the heating coil section includes at least three adjacent pairs of heating coils.

The heating coil section is configured such that electric currents flow oppositely to each other through at least one pair among the at least three adjacent heating-coil pairs that form the line of the hearing coils. On top of that, the heating coil section is configured such that the electric currents flow in the same direction through the first and the third heating coils, and the electric currents flow in the same direction through the second and the fourth heating coils.

The structure discussed above allows improving the heating efficiency, and preventing a leakage of the electromagnetic wave.

### BRIEF DESCRIPTION OF DRAWINGS

FIG. 1 is an exploded perspective view of a cooker in accordance with a first embodiment of the present disclosure.
FIG. 2 is a plan view of a heating coil section in accordance with the first embodiment.
FIG. 3A is a sectional view of the heating coil section cut along line 3A - 3A in FIG. 2.
FIG. 3B is a sectional view of the heating coil section cut along line 3B - 3B in FIG. 2.
FIG. 3C is a sectional view of the heating coil section cut along line 3C - 3C in FIG. 2.
FIG. 4 is an exploded perspective view of a cooker in accordance with a second embodiment of the present disclosure.
FIG. 5 is a plan view of a heating coil section in accordance with the second embodiment.
FIG. 6 is an exploded perspective of a cooker in accordance with a third embodiment of the present disclosure.
FIG. 7 is a plan view of a heating coil section in accordance with the third embodiment.
FIG. 8A is a plan view of a heating coil section in accordance with a modified embodiment of the present disclosure.
FIG. 8B is a plan view of a heating coil section in accordance with a modified embodiment of the present disclosure.
FIG. 8C is a plan view of a heating coil section in accordance with a modified embodiment of the present disclosure.
FIG. 9 is a sectional view of a conventional cooker.

### DESCRIPTION OF EMBODIMENTS

Exemplary embodiments of the cooker in accordance with the present disclosure are demonstrated hereinafter with reference to the accompanying drawings. In the embodiments below, similar elements have the same reference marks, and descriptions to be duplicated are sometimes omitted.

### FIRST EXEMPLARY EMBODIMENT

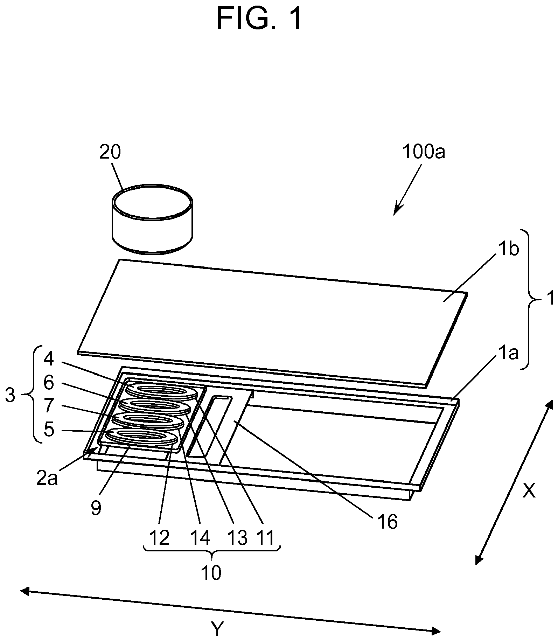

The first embodiment is demonstrated with reference to FIG. 1 - FIG. 3C.

FIG. 1 is an exploded perspective view of cooker 100a in accordance with the first embodiment. Arrow X and arrow Y in FIG. 1 indicate respectively a back-front direction and a right-left direction.

As FIG. 1 shows, main body 1 of cooker 100a includes housing 1a that has an opening on the top and top-plate 1b that is placed on housing 1a for covering the opening. Heating coil section 2a is disposed within main body 1 for applying an induction heating to cooking utensil 20 (e.g. a pan) placed on top-plate 1b.

Heating coil section 2a includes four heating coils 3, four ferrites 10, and shielding plate 9. Each of heating coils 3 has an oval shape in the same size, and shielding plate 9 has an approx. rectangular shape. Each of ferrites 10 has an oval shape in the same size and is disposed respectively below each of heating coils 3.

In this first embodiment, four heating coils 3 are placed on the top face of shielding plate 9 in one line along the back-front direction of main body 1.

Reinforcing plate 16 is disposed within housing 1a for rigidly mounting the shielding plate 9 to housing 1a. Heating coil section 2a is disposed in main body 1 after shielding plate 9 is rigidly mounted to housing 1a and reinforcing plate 16.

Heating coil 3 is a general term for a first heating coil (i.e. heating coil 4), a second heating coil (i.e. heating coil 5), a third heating coil (i.e. heating coil 6), and a fourth heating coil (i.e. heating coil 7).

Heating coils 4 and 5 are disposed respectively at the ends of the line on which the four heating coils are placed. Heating coils 6 and 7 are disposed in the middle of the line such that heating coil 6 is next to heating coil 4 and heating coil 7 is next to heating coil 5.

Ferrite 10 is a general term for a first ferrite (i.e. ferrite 11), a second ferrite (i.e. ferrite 12), a third ferrite (i.e. ferrite 13), and a fourth ferrite (ferrite 14). Each of ferrites 11 - 14 is placed below each of heating coils 4 - 7.

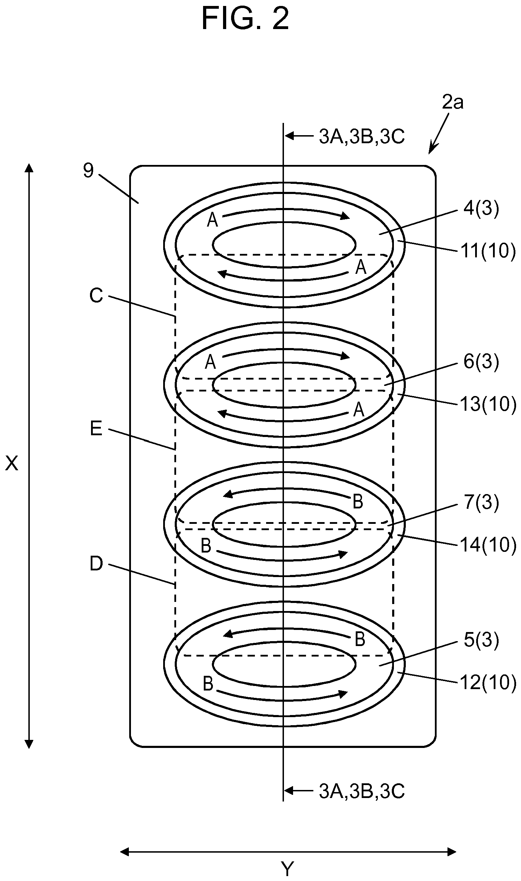

FIG. 2 is a plan view of heating coil section 2a in accordance with this first embodiment. Each heating coil of heating coil section 2a is configured to act as follows as shown in FIG. 2: Driving the heating coils 4 and 6 causes electric currents to flow through coils 4 and 6 along arrow A direction (clockwise direction viewed from the above), and driving the heating coils 5 and 7 causes electric currents to flow through coils 5 and 7 along arrow B direction (anticlockwise direction viewed from the above).

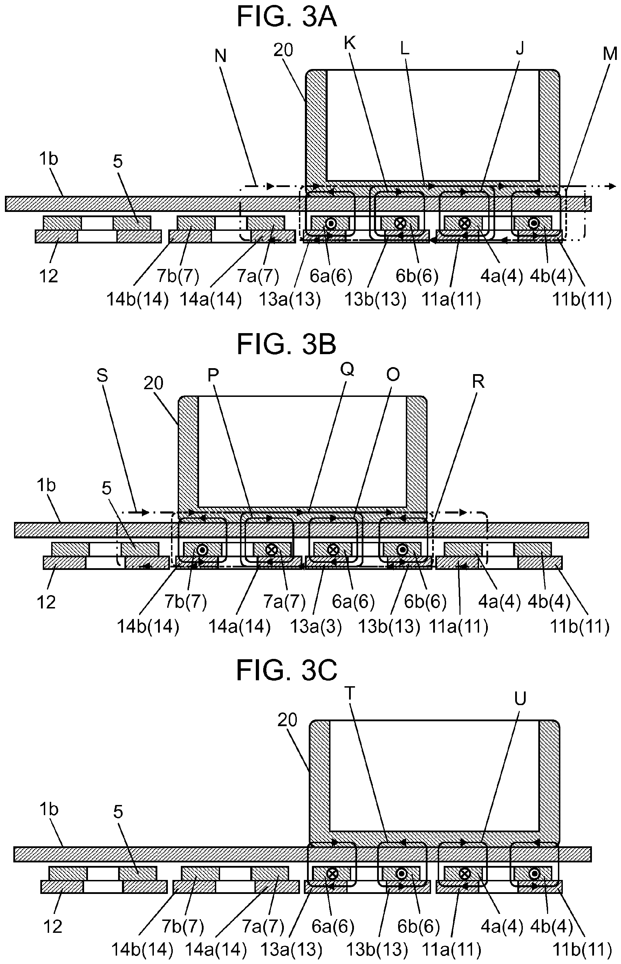

FIG. 3A is a sectional view cut along line 3A - 3A in FIG. 2, and illustrates the electric currents flowing through heating coils 4 and 6 as well as magnetic fluxes given off by heating coils 4 and 6. FIG. 3B is a sectional view cut along line 3B - 3B in FIG. 2, and illustrates the electric currents flowing through heating coils 6 and 7 as well as magnetic fluxes given off by heating coils 6 and 7. FIG. 3C is a sectional view cut along line 3C - 3C in FIG. 2, and illustrates the electric currents flowing through heating coils 4 and 6 as well as magnetic fluxes given off by heating coils 4 and 6.

As FIGS. 3A - 3C show, heating coil 4 includes inside winding 4a closer to heating coil 6, and outside winding 4b opposite to heating coil 6. Ferrite 11 includes inside ferrite 11a closer to ferrite 13, and outside ferrite 11b opposite to ferrite 13.

Heating coil 6 includes inside winding 6a closer to heating coil 7, and outside winding 6b closer to heating coil 4. Ferrite 13 includes inside ferrite 13a closer to ferrite 14, and outside ferrite 13b closer to ferrite 11.

Heating coil 7 includes inside winding 7a closer to heating coil 6 and outside winding 7b closer to heating coil 5. Ferrite 14 includes inside ferrite 14a closer to ferrite 13 and outside ferrite 14b closer to ferrite 12.

In this first embodiment, as discussed above, driving the heating coils 4 and 6 will cause electric currents to flow through the heating coils 4 and 6 along the clockwise direction. Driving the heating coils 5 and 7 will cause electric currents to flow through the heating coils 5 and 7 along the anticlockwise direction. In other words, the electric currents run through heating coils 4 and 6 in the same direction. The electric currents run through heating coils 5 and 7 in the same direction. The electric currents run through heating coils 6 and 7 in the opposite direction to each other.

The reason why the foregoing structure is used is described hereinafter with reference to FIG. 3A- FIG. 3C.

FIG. 3A shows a case where heating coils 4 and 6 are configured such that the electric current runs through heating coil 4, and it runs in the opposite direction through heating coil 6. Focusing on a region (dotted region C in FIG. 2), in which heating coil 4 is closer to heating coil 6, will reveal that the electric current runs through the winding of heating coil 4 and it runs through the winding of heating coil 6 in the same direction (from this side toward that side in FIG. 3A).

In this case, the electric current running through inside winding 4a generates a magnetic flux around winding 4a, and the magnetic flux draws clockwise locus J and travels through cooking utensil 20 as well as through inside ferrite 11a. The electric current running through outside winding 6b generates a magnetic flux around the winding 6b, and the flux draws clockwise locus K and travels through cooking utensil 20 as well as outside ferrite 13b.

As a result, an intense magnetic flux is generated around inside winding 4a and outside winding 6b. This intense magnetic flux draws clockwise locus L and travels through cooking utensil 20, inside ferrite 11a, and outside ferrite 13b.

At this time, a part of the magnetic flux drawing locus L deviates from locus L and becomes a leakage flux, which draws clockwise locus M and travels through cooking utensil 20, ferrite 11, and ferrite 13.

In the same manner as the magnetic flux drawing locus L, a part of the magnetic flux drawing locus M deviates from locus M and becomes a leakage flux, which draws clockwise locus N and travels through cooking utensil 20, ferrite 11, and ferrite 13.

A part of the leakage flux leaked from the magnetic flux drawing locus N toward heating coil 7 is weakened by ferrite 14 so that it never leaks outside cooker 100a. Nevertheless another part of the foregoing leakage flux leaked in a direction opposite to heating coil 7 leaks outside cooker 100a.

As discussed above, in the case where heating coils 4 and 6 are configured such that the electric currents run thereon in opposite directions to each other, an intense magnetic flux is generated in region C shown in FIG. 2; however, a leakage flux in a large amount is also generated.

In this first embodiment, as FIG. 3B shows, heating coils 6 and 7 are configured for the electric currents to run thereon in opposite directions to each other.

In this case, the electric current running through inside winding 6a generates a magnetic flux around winding 6a, and this magnetic flux draws clockwise locus O and travels through cooking utensil 20 as well as through inside ferrite 13a. The electric current running through inside winding 7a generates a magnetic flux around the winding 7a, and this flux draws clockwise locus P and travels through cooking utensil 20 as well as outside ferrite 14a.

Since the magnetic flux drawing locus O travels in the same direction as the magnetic flux drawing locus P, the magnetic flux given off by heating coil 6 and the magnetic flux given off by heating coil 7 strengthen each other in region E (shown in FIG. 2) where heating coil 6 becomes closer to heating coil 7.

As a result, an intense magnetic flux is generated around inside winding 6a and inside winding 7a. This intense magnetic flux draws clockwise locus Q and travels through cooking utensil 20, inside ferrite 13a, and inside ferrite 14a. This mechanism allows strengthening the magnetic flux in region E shown in FIG. 2, so that the heating efficiency can be improved.

At this time, a part of the magnetic flux drawing locus Q deviates from locus Q and becomes a leakage flux, which draws clockwise locus R and travels through cooking utensil 20, ferrite 13, and ferrite 14.

In the same manner as the magnetic flux drawing locus L, a part of the magnetic flux drawing locus R deviates from locus R and becomes a leakage flux, which draws clockwise locus S and travels through cooking utensil 20, ferrite 11, and ferrite 12.

However, the foregoing leakage flux is weakened by ferrites 11 and 12, so that it never leaks outside cooker 100a.

In this first embodiment, as FIG. 3C shows, heating coils 4 and 6 are configured for the electric currents to run thereon in the same direction.

In this case, the electric current running through inside-winding 4a generates a magnetic flux around winding 4a, and this magnetic flux draws clockwise locus U and travels through cooking utensil 20 as well as through inside-ferrite 11a. The electric current running through outside winding 6b generates a magnetic flux around the winding 6b, and this flux draws anticlockwise locus T and travels through cooking utensil 20 as well as outside ferrite 13b.

The magnetic flux drawing locus T travels in an opposite direction to the magnetic flux drawing locus U, so that this mechanism allows preventing the leakage flux.

Heating coils 5 and 7 are configured such that the electric currents flow thereon in the same direction. This is mechanism is the same as depicted in FIG. 3C.

When heating coils 4 and 6 are driven, the experiment conducted by the inventors proves that a case in which the electric currents running on heating coils 4 and 6 in the opposite directions to each other produces approx. 7% difference in the leakage flux from a case in which the electric currents running on coils 4 and 6 in the same direction.

The experiment conducted by the inventors also proves that a drive of heating coils 6 and 7 produces approx. 2% difference in the heating efficiency from a drive of heating coils 4 and 6. A similar phenomenon is observed between a drive of heating coils 6, 7 and a drive of heating coils 5, 7.

As discussed above, in this first embodiment, heating coil section 2a includes heating coils 4 - 7 placed on the same plane within main body 1. To be more specific, heating coil section 2a includes at least three adjacent pairs of heating coils 3 including a pair formed of heating coils 4 and 5, a pair formed of heating coils 5 and 6, and a pair formed of heating coils 6 and 7.

Heating coil section 2a is configured to conduct the following mechanism: electric currents flow in opposite directions to each other through at least one pair (e.g. the pair formed of adjacent heating coils 6, 7) among the three adjacent pairs of heating coil 3, electric currents flow in the same direction through heating coils 4, 6, and electric currents flow in the same direction through heating coils 5, 7.

In this first embodiment, in region E shown in FIG. 2, the electric currents flow in the same direction through inside-winding 6a of heating coil 6 and inside winding 7a of heating coil 7. As a result, the magnetic flux generated in region E is strengthened, so that the heating efficiency of cooker 100a can be improved.

Heating coils 4, 5 prevent the magnetic flux from leaking out of heating coils 6, 7, so that the leak of electromagnetic wave from cooker 100a can be prevented.

### SECOND EXEMPLARY EMBODIMENT

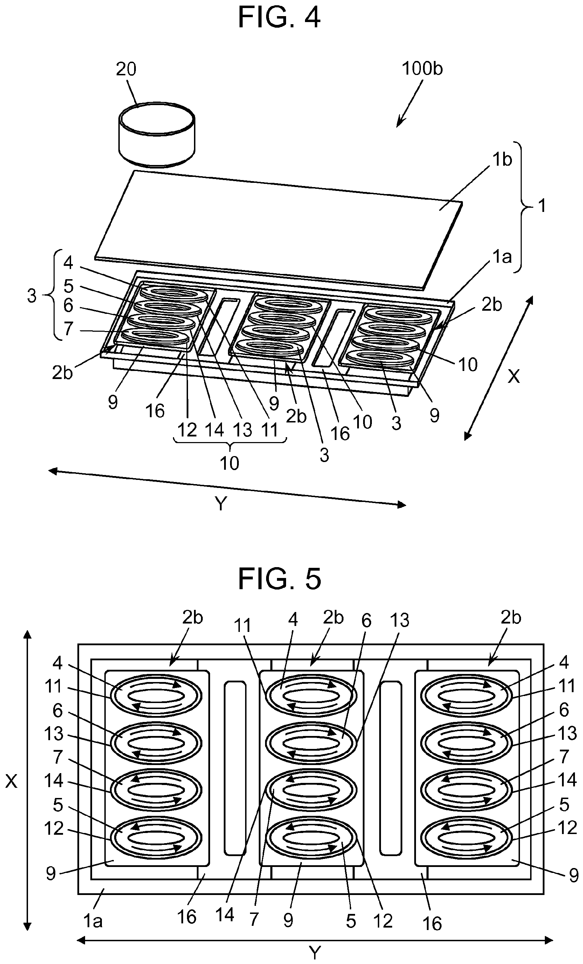

A cooker in accordance with the second embodiment of the present disclosure is demonstrated hereinafter with reference to FIG. 4 and FIG. 5.

FIG. 4 is an exploded perspective view of cooker 100b in accordance with this second embodiment. FIG. 5 is a plan view of heating coil section 2b in accordance with the second embodiment and illustrates the electric currents running through heating coils 3.

In this embodiment, as FIG. 4 and FIG. 5 show, three heating coil sections 2b are mounted along the right-left direction (i.e. arrow Y shown in FIGS. 4 and 5) with two reinforcing plates 16 prepared in housing 1a. Heating coil sections 2b located on both the ends are rigidly mounted to housing 1a and to reinforcing plates 16, and heating coil section 2b located at the center is rigidly mounted to two reinforcing plates 16, so that the three heating coil sections 2b are placed within housing 1a.

Heating coils 4 - 7 forming one line are placed on each of the top faces of shielding plates 9 that cover heating coil sections 2b respectively.

Electric currents flow in opposite directions to each other through heating coils 6, 7 in each of heating coil sections 2b. This is the same mechanism as that demonstrated in the first embodiment. To be more specific, each one of heating coil sections 2b is configured such that the electric currents flow in opposite directions to each other through at least one pair (e.g. the pair formed of heating coils 6 and 7 adjacent to each other) among the three adjacent pairs of heating coils 3.

In each one of heating coil sections 2b, the electric currents flow in the same direction through heating coils 6 and 7 at the region where heating coil 6 and heating coil 7 become closer to each other, thereby strengthening the magnetic flux generated in this region. As a result, the heating efficiency of cooker 100b can be improved.

In each one of heating coil sections 2b, the electric currents flow in the same direction through heating coils 4 and 6, and the electric currents flow also in the same direction through heating coils 5 and 7, so that heating coils 4, 7 prevent the magnetic flux from leaking out of heating coils 6, 7 in each one of heating coil sections 2b. This mechanism thus allows preventing the electromagnetic wave from leaking out of cooker 100b.

### THIRD EXEMPLARY EMBODIMENT

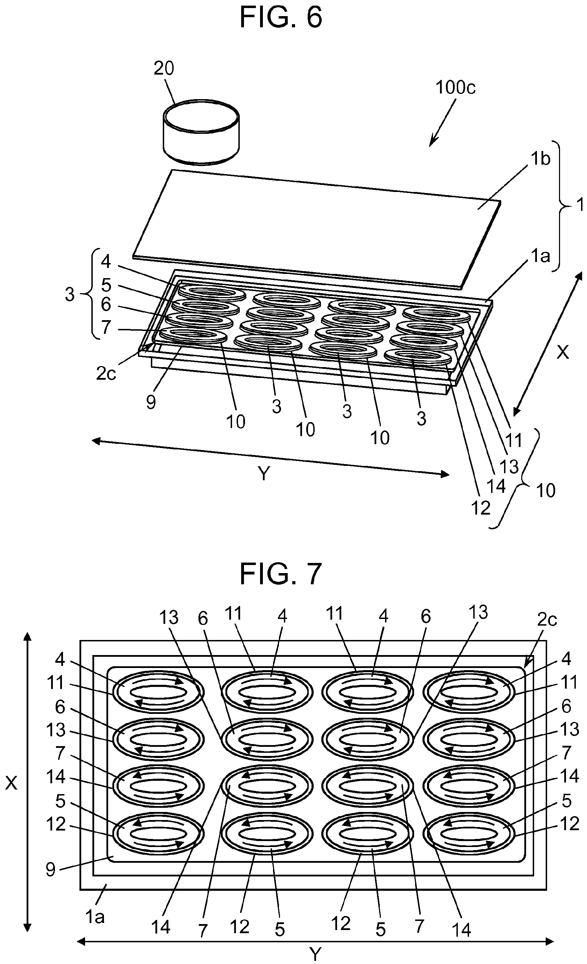

A cooker in accordance with the third embodiment is demonstrated hereinafter with reference to FIGS. 6 and 7.

FIG. 6 is an exploded perspective view of cooker 100c in accordance with this third embodiment. FIG. 7 is a plan view of heating coil sections 2c in accordance with the third embodiment and illustrates electric currents running through heating coils 3.

In this third embodiment, as FIGS. 6 and 7 show, total 16 heating coils 3 are placed on the top face of shielding plate 9 disposed in housing 1a. Heating coils 3 are arranged in matrix formed of four rows along arrow X and four lines along arrow Y as shown in FIGS. 6 and 7.

In each line, electric currents flow in opposite directions to each other through heating coils 6, 7. This is the same mechanism as that in the first embodiment. To be more specific, each one of heating coil sections 2c is configured such that the electric currents flow in opposite directions to each other through at least one pair (e.g. the pair formed of heating coils 6 and 7 adjacent to each other) among the three adjacent pairs of heating coils 3 in each of the lines.

In each one of the lines, the electric currents flow in the same direction through heating coils 6 and 7 in the region where heating coil 6 and heating coil 7 become closer to each other, thereby strengthening the magnetic flux generated in this region. As a result, the heating efficiency of cooker 100c can be improved.

In each one of the lines of heating coil sections 2c, the electric currents flow in the same direction through heating coils 4 and 6, and the electric currents flow also in the same direction through heating coils 5 and 7. Heating coils 4, 7 in each one of the lines prevent the magnetic flux from leaking out of heating coils 6, 7. This mechanism thus allows preventing the electromagnetic wave from leaking out of cooker 100c.

### MODIFIED EMBODIMENTS

Exemplary embodiments 1 - 3 of the present disclosure are demonstrated hereinbefore; however, the present disclosure is not limited to these embodiments.

For instance, oval heating coils 3 are used in cookers 100a - 100c in the foregoing embodiments 1 - 3; however, heating coil 3 can be in any shape (e.g. circle) as far as the shape allows applying an induction heating to cooking utensil 20 placed thereon.

In the embodiments 1 - 3, cookers 100a - 100c are configured for the electric currents to flow clockwise (along arrow A shown in FIG. 2) through heating coils 4, 5, and to flow anticlockwise (along arrow B in FIG. 2) through heating coils 5, 7. Nevertheless, the electric currents can flow in opposite directions to each other through the respective heating coils.

To prepare the condition discussed above, the flow direction of each electric current flowing through the respective heating coils 3 can be individually controlled by a controller (not shown), or the winding directions of heating coils 3 can be set in advance to prepare the foregoing condition.

In the embodiments 1 - 3, each of cookers 100a - 100c includes four heating coils 3 in one line; however, it can include five heating coils 3 in one line.

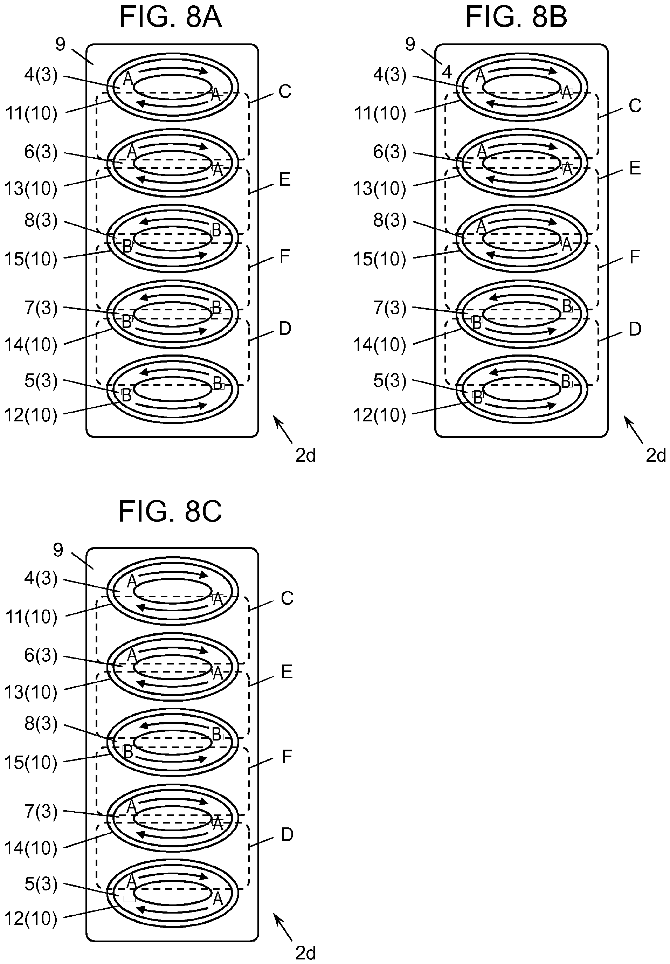

FIGS. 8A - 8C are plan views of heating coil section 2d in accordance with one of the modified embodiments of the present disclosure, and illustrate electric currents flowing through heating coils 3.

As FIGS. 8A - 8C show, heating coil section 2d includes heating coil 8 between heating coils 6 and 7 additionally to the structure of heating coil 2a shown in FIG. 2. Heating coil 8 has the same size and shape as those of heating coils 4 - 7.

Heating coil section 2d further includes ferrite 15 below heating coil 8, and this ferrite 15 has the same size and shape as those of ferrites 11 - 14. Heating coil 8 works as a fifth heating coil, and ferrite 15 works as a fifth ferrite.

In the structure shown in FIG. 8A, the electric currents flow clockwise (along arrow A) through heating coils 4, 6, and flow anticlockwise (along arrow B) through heating coils 5, 7, and 8. In this modified embodiment, the electric currents thus flow also in opposite directions to each other through heating coils 6 and 8.

To be more specific, heating coil section 2d is configured for the electric currents to flow in the opposite directions to each other through at least one pair of heating coils 3 formed of adjacent heating coils (e.g. heating coils 6 and 8) among the three adjacent pairs of heating coils 3.

In this modified embodiment, the electric currents flow in the same direction through heating coils 6, 8 in region E where coils 6 and 8 become closer to each other, thereby strengthening a magnetic flux generated in this region. As a result, the heating efficiency of the cooker can be improved.

Heating coil section 2d is configured for the electric currents to flow in the same direction through heating coils 4, 6, and for the electric currents to flow in the same direction through heating coils 5, 7. This structure allows heating coils 4, 5 to prevent magnetic fluxes from leaking out of heating coils 6, 8. As a result, a leakage of the electromagnetic wave from the cooker can be prevented.

In the structure shown in FIG. 8B, electric currents flow through heating coil 8 reversely to what is shown in FIG. 8A, so that the electric currents flow in opposite directions to each other through heating coils 7, 8 in this modified embodiment.

To be more specific, heating coil section 2d is configured such that the electric currents flow in opposite directions to each other through at least one pair of adjacent heating coils 3 (e.g. the pair formed of heating coils 7 and 8) among three adjacent pairs of heating coils 3.

This modified embodiment proves that the electric currents flow in the same direction through heating coils 7 and 8 in region F where coils 7 and 8 become closer to each other, thereby strengthening a magnetic flux generated in this region. As a result, the heating efficiency of the cooker can be improved.

Heating coil section 2d is configured such that the electric currents flow in the same direction through heating coils 4 and 6, and the electric currents flow in the same direction through heating coils 5 and 7. This structure allows heating coils 4 and 5 to prevent magnetic fluxes from leaking out of heating coils 7 and 8. As a result, a leakage of the electromagnetic wave from the cooker can be prevented.

In the structure shown in FIG. 8C, electric currents flow through heating coils 5, 7 reversely to what is shown in FIG. 8A, so that the electric currents flow in opposite directions to each other through heating coils 6, 8, and the electric currents flow in opposite direction to each other through heating coils 7, 8 in this modified embodiment.

To be more specific, heating coil section 2d is configured such that the electric currents flow in opposite directions to each other through at least one pair of adjacent heating coils 3 (e.g. the pair formed of heating coils 6, 8, and the pair formed of heating coils 7, 8) among three adjacent pairs of heating coils 3.

This modified embodiment proves that the electric currents flow in the same direction through heating coils 6 and 8 in region E where coils 6 and 8 become closer to each other, thereby strengthening a magnetic flux generated in region E. This modified embodiment also proves that the electric currents flow in the same direction through heating coils 7 and 8 in region F where coils 7 and 8 become closer to each other, thereby strengthening a magnetic flux generated in region F. As a result, the heating efficiency of the cooker can be improved.

Heating coil section 2d is configured for the electric currents to flow in the same direction through heating coils 4, 6, and for the electric currents to flow in the same direction through heating coils 5, 7. This structure allows heating coils 4, 5 to prevent a magnetic flux from leaking out of heating coils 7, 8. As a result, a leakage of the electromagnetic wave from the cooker can be prevented.

### INDUSTRIAL APPLICABILITY

The present disclosure is applicable both to home-use cookers and professional-use cookers.

### REFERENCE MARKS IN THE DRAWINGS

- 1: main body
- 1a: housing
- 1b, 201: top plate
- 2a, 2b, 2c, 2d: heating coil section
- 3, 4, 5, 6, 7, 8, 202, 203: heating coil
- 4a, 6a, 7a: inside winding
- 4b, 6b, 7b: outside winding
- 9: shielding plate
- 10, 11, 12, 13, 14, 15: ferrite
- 16: reinforcing plate
- 20, 200: cooking utensil
- 100a, 100b, 100c: cooker

## Claims

1. A cooker comprising:
a main body (1) including a top plate (lb) on which a cooking utensil (20) is to be disposed, and
a heating coil section (2a, 2b, 2c, 2d)
including a line in which at least four heating coils (3) are disposed on the same plane within the main body (1),
wherein the heating coil section(2a, 2b, 2c, 2d) includes at least three adjacent pairs of heating coils (3) formed of a first heating coil (4) disposed at a first end of the line, a second heating coil (5) disposed at a second end of the line, a third heating coil (6) next to the first heating coil (4), and a fourth heating coil (7) next to the second heating coil (5), and
**characterized in that**
the heating coil section (2a, 2b, 2c, 2d) is configured such that electric currents flow in opposite directions to each other through at least one adjacent pair among at least the three adjacent pairs of the heating coils (3) forming the line, electric currents flow in the same direction through the first and the third heating coils, and electric currents flow in the same direction through the second and the fourth heating coils.

## Patentansprüche

1. Herd, umfassend:
einen Hauptkörper (1), der eine obere Platte (lb) enthält, auf der ein Kochgerät (20) angeordnet werden soll, und
einen Heizspulenabschnitt (2a, 2b, 2c, 2d), der eine Leitung enthält, in der mindestens vier Heizspulen (3) auf der gleichen Ebene in dem Hauptkörper (1) angeordnet sind,
wobei der Heizspulenabschnitt (2a, 2b, 2c, 2d) mindestens drei benachbarte Paare von Heizspulen (3) enthält, die aus einer ersten Heizspule (4), die an einem ersten Ende der Leitung angeordnet ist, einer zweiten Heizspule (5), die an einem zweiten Ende der Leitung angeordnet ist, einer dritten Heizspule (6) neben der ersten Heizspule (4) und einer vierten Heizspule (7) neben der zweiten Heizspule (5) gebildet sind, und
**dadurch gekennzeichnet, dass**
der Heizspulenabschnitt (2a, 2b, 2c, 2d) konfiguriert ist, sodass elektrische Ströme in einander entgegengesetzte Richtungen durch mindestens ein benachbartes Paar unter mindestens den drei benachbarten Paaren der Heizspulen (3), die die Leitung bilden, fließen, elektrische Ströme in die gleiche Richtung durch die erste und die dritte Heizspule fließen und elektrische Ströme in die gleiche Richtung durch die zweite und die vierte Heizspule fließen.

## Revendications

1. Cuiseur comprenant :
un corps principal (1) comprenant une plaque supérieure (1b) sur laquelle un ustensile de cuisine (20) doit être disposé, et
une section de bobine chauffante (2a, 2b, 2c, 2d) comprenant une ligne dans laquelle au moins quatre bobines chauffantes (3) sont disposées sur le même plan dans le corps principal (1),
dans lequel la section de bobine chauffante (2a, 2b, 2c, 2d) comprend au moins trois paires adjacentes de bobines chauffantes (3) formées d'une première bobine chauffante (4) disposée au niveau d'une première extrémité de la ligne, une deuxième bobine chauffante (5) disposée au niveau d'une deuxième extrémité de la ligne, une troisième bobine chauffante (6) près de la première bobine chauffante (4) et une quatrième bobine chauffante (7) près de la deuxième bobine chauffante (5), et
**caractérisé en ce que**
la section de bobine chauffante (2a, 2b, 2c, 2d) est conçue de manière que des courants électriques circulent dans des directions opposées les uns aux autres à travers au moins une paire adjacente parmi au moins les trois paires adjacentes des bobines chauffantes (3) formant la ligne, des courants électriques circulent dans la même direction à travers la première et la troisième bobine chauffante et des courants électriques circulent dans la même direction à travers la deuxième et la quatrième bobine chauffante.
